(19) Europäisches Patentamt
European Patent Office
Office européen des brevets

(11) **EP 1 888 677 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(51) Int Cl.:
***C08J 11/00*** *(2006.01)*

(21) Anmeldenummer: 06754237.3

(22) Anmeldetag: **08.06.2006**

(86) Internationale Anmeldenummer:
**PCT/EP2006/005503**

(87) Internationale Veröffentlichungsnummer:
**WO 2006/131376 (14.12.2006 Gazette 2006/50)**

(54) **VERFAHREN ZUM RECYCLING VON KUNSTSTOFFEN UND DESSEN VERWENDUNG**

METHOD FOR RECYCLING PLASTICS AND USE THEREOF

PROCEDE DE RECYCLAGE DE MATIERES PLASTIQUES ET APPLICATION DUDIT PROCEDE

(84) Benannte Vertragsstaaten:
**DE FR GB IT**

(30) Priorität: **08.06.2005 DE 102005026451**

(43) Veröffentlichungstag der Anmeldung:
**20.02.2008 Patentblatt 2008/08**

(73) Patentinhaber: **Fraunhofer-Gesellschaft zur Förderung der angewandten Forschung e.V.
80686 München (DE)**

(72) Erfinder:
• **MÄURER, Andreas
85354 Freising (DE)**
• **SCHLUMMER, Martin
85051 Ingolstadt (DE)**
• **BECK, Otto
85416 Langenbach (DE)**

(56) Entgegenhaltungen:
WO-A-02/38660     WO-A-03/035729
DE-A1- 4 435 191     DE-A1- 10 207 336
US-A- 4 164 484     US-A- 5 994 417

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 888 677 B1

**Beschreibung**

Die Erfindung betrifft ein Verfahren zum Recycling von Kunststoffen, die mindestens zwei auf Polystyrol basierende Polymere, Copolymere oder Blends hiervon enthalten.

Jährlich fallen in Europa etwa 6 Mio. t Elektroaltgeräte an. Etwa ein Fünftel dieser Abfälle sind Kunststoffe. Die EU-Richtlinie 2002/96/EC (WEEE-Richtlinie) fordert hohe Verwertungsquoten, die nur mit einem werkstofflichen Recyclingverfahren für die Kunststoff-Fraktionen erreicht werden können.

Allerdings ist ein werkstoffliches Recycling für die Kunststoffe aus Elektroaltgeräten aufgrund ihres hohen Schadstoffgehaltes und ihrer Materialvielfalt nicht Stand der Technik. Als Schadstoffe sind vor allem die veralteten bromierten Flammschutzadditive mit hohem Dioxinbildungspotential zu nennen.

Aufgrund der Polymervielfalt in Elektroaltgeräten wäre eine sehr effektive Sortierung und Kunststofftrennung und -aufbereitung erforderlich, um hochwertige Recyclate zu produzieren, die Neuwarespezifikationen erreichen.

Diese erforderliche Trenntechnik steht bislang nicht zur Verfügung, die üblichen Trennverfahren auf Basis unterschiedlicher Dichte, Elektrostatik, Sprödigkeit, optischer Eigenschaften, usw. versagen hier.

Zur Entsorgung der mit bromierten Flammschutzadditiven ausgerüsteten Kunststoffabfälle wurden thermische und rohstoffliche Verfahren entwickelt (Uddin, M.A.; Bhaskar, T.; Kaneko J.; Muto, A.; Sakata, Y.; Matsui, T. (2002) "Dehydrohalogenatiopn during pyrolysis of brominate flame retardant containing high impact polystyrene (HIPS.Br) mixed with polyvinylchloride (PVC). Fuel 81, pp 1819-1825). Nachteilig ist, dass dabei bestenfalls neue petrochemische Rohstoffe produziert oder lediglich der Heizwert der Kunststoffe genutzt werden.

Für ein hochwertiges werkstoffliches Recycling der enthaltenen Kunststoffe wurden bereits verschiedene lösemittelbasierte, also physikalische Verfahren zur Abtrennung der bromierten Flammschutzadditive im Labor- und kleintechnischen Maßstab entwickelt (Mäurer, A., Schlummer, M. (2004) "Good as new. Recycling plastics from WEEE and packaging waste", Waste Management World, May-June 2004, pp 33-43). Nachteilig bei diesen Umlöseverfahren ist die unzureichende Spezifität der eingesetzten Lösemittel. Aus inhomogenen Polymergemischen werden neben dem eigentlichen Zielpolymer auch andere Polymere und Bestandteile wie Additive oder Degradationsprodukte mitextrahiert. Während die mitgelösten niedermolekularen Substanzen, d.h. Additive oder Degradationsprodukte, beispielsweise durch eine Polymerfällung mittels Fällmittel reduziert werden können, gelingt die Trennung der miteinander gelösten oder dispergierten unverträglichen Polymere nicht.

Typische Beispiele für diese unverträglichen Polymere sind Acrylnitril-Butadien-Styrol (ABS) und Polystyrol (PS) oder ABS und Styrol-Butadien (SB), die in Elektrogeräten sehr häufig als Gehäusewerkstoffe eingesetzt werden und daher im Elektroaltgeräte-Abfall eine große Mengenrelevanz aufweisen.

So entsteht aus typischen kunststoffhaltigen Elektroaltgeräte (EAG)-Fraktionen eine Polymerlösung, in der miteinander unverträgliche oder nicht-mischbare Polymere dispergiert sind. Nach Abtrennung des Lösemittels erhält man ein Gemisch aus unverträglichen Kunststoffen, die keine zufriedenstellenden Eigenschaften erreichen.

In der WO 03/035729 A2 wird ein Verfahren zum Herstellen von wiederaufschäumbarem Polystyrol durch werkstoffliche Verwertung von geschäumten Polystyrol-Abfällen beschrieben.

Die DE 102 07 336 A1 beschreibt ein Verfahren zum Reinigen und Wiederverwerten von geschäumten Polystyrol-Abfällen.

Auch in der WO 02/38660 A1 wird ein Recyclingverfahren für geschäumtes Polystyrol dargelegt.

In der Patentschrift US 5,994,417 wird ein Verfahren zur Abtrennung von Polymeren von anderen Materialien beschrieben, wobei das Polymer Polyamid enthält.

Die DE 44 35 191 A1 umfasst ein Verfahren zum Ausfällen von Polymeren aus Kunststofflösungen.

Die US 4,164,484 betrifft ein Verfahren zur Wiedergewinnung von Polyolefinen und Polystyrol aus Plastikabfall.

Ausgehend hiervon war es Aufgabe der vorliegenden Erfindung, ein Verfahren zum Recycling von Kunststoffen bereitzustellen, das die beschriebenen Nachteile des Standes der Technik beseitigt und die einfache Rückgewinnung von auf Polystyrol basierenden Polymeren ermöglicht, wobei eine einfache und damit kostengünstige Verfahrensführung gewährleistet werden soll.

Diese Aufgabe wird durch das Verfahren mit den Merkmalen des Anspruchs 1 sowie die Verwendung des Verfahrens gemäß den Merkmalen des Anspruchs 24 gelöst. Die weiteren abhängigen Ansprüche zeigen vorteilhafte Weiterbildungen auf.

Erfindungsgemäß wird ein Verfahren zum Recycling von Kunststoffen, die mindestens zwei auf Polystyrol basierende Polymere, Copolymere oder Blends hiervon enthalten, bereitgestellt. Das Verfahren basiert dabei auf den folgenden Verfahrensschritten:

    a) Der Kunststoff wird mit mindestens einem Lösungsmittel für die Polymere, Copolymere oder Blends hiervon versetzt.

    b) Der Lösung der Polymere, Copolymere oder Blends hiervon wird mindestens ein Fällmittel, das mit dem mindestens einen Lösungsmittel mischbar ist, zugesetzt. Dabei kommt es zur Ausfällung des mindestens einen Polymers, Copolymers oder Blends hiervon in gelartiger Form. Entscheidend hierbei ist es, dass das Fällmittel und/oder die Menge des Fällmittels im Verhältnis zum Lösungsmittel so gewählt wird, dass die Mischung von Lösungsmittel und Fällmittel einen Wert für die Wasserstoff-Bindungsstärke $\delta_H$ des Hansen-Löslichkeits-Parameters von 10 bis 15 $\sqrt{MPa}$ aufweist.

c) Anschließend werden mindestens zwei gelartige Fällungsprodukte gebildet, die sich voneinander aufgrund ihrer Adhäsionseigenschaften separieren lassen.

Besonderes Merkmal der vorliegenden Erfindung ist, dass auf diese Weise zwei unverträgliche Polymere, die auf Polystyrol basieren, als zwei separate Phasen getrennt werden können.

Unter Kunststoffen sind im Rahmen der vorliegenden Anmeldung sowohl Kunststoffe oder Mischungen hiervon aber auch ganz allgemein Verbundstoffe mit anderen

Materialien zu verstehen.

Das erfindungsgemäße Verfahren bringt dabei den Vorteil mit sich, dass die Fällung überraschenderweise in preiswerten und robusten Rührkesseln bei milden Temperaturen, vorzugsweise unterhalb von 100 °C, erfolgen kann, wodurch keine thermische Schädigung der Polymere auftritt. Die Polymerphasen trennen sich dabei aufgrund ihrer unterschiedlichen Materialeigenschaften zu hochreinen Produkten, die sehr gute reologische und mechanische Eigenschaften aufweisen, sodass sie jeweils als Substitut für Neuware eingesetzt werden können.

Ein weiterer wesentlicher Vorteil besteht darin, dass die eingesetzte Lösungsmittelmenge soweit reduzierbar ist, dass mit Polymergel gearbeitet werden kann und der Lösungsmittelüberstand preiswert mechanisch abgezogen werden kann. Parallel und direkt anschließend zur Phasenseparierung erfolgt dann die Trennung des Restlösungsmittels.

Dieses Verfahren ist großtechnisch umsetzbar ohne hohe Investitionskosten - wie für Extruder, Kneter erforderlich - und vermeidet große und teure Lösemittelvolumina. Damit lassen sich die Betriebskosten aufgrund der geringen umlaufenden und destillativ aufzubereitenden Lösemittelmengen niedrig halten, was zu einem niedrigen thermischen Energiebedarf führt.

Es findet keine thermisch-mechanische Belastung des Polymers statt, wodurch eine Materialschädigung und ein Molekulargewichtsabbau vermieden werden. Die originären Polymereigenschaften und die Polymerqualität bleiben erhalten.

Erfindungsgemäß fallen mindestens zwei Fällungsprodukte in gelartiger Form an. Aufgrund der Adhäsionseigenschaften der gleichartigen Fällungsprodukte kommt es dann zur Entmischung der verschiedenen Polymere, wodurch diese sich auf einfache Weise separieren lassen.

Bei der Durchmischung von Lösungsmittel und Fällmittel ist es dabei bevorzugt, dass die Adhäsionskräfte die durch das Durchmischen zugeführte Dispersionsenergie überwiegen, so dass sich das mindestens eine gelartige Fällungsprodukt vollständig von den weiteren Bestandteilen des Kunststoffs entmischt.

Vorzugsweise weist die Mischung von Lösungsmittel und Fällmittel eine Polarität auf, ausgedrückt durch einen Wert für die Wasserstoff-Bindungsstärke $\delta_H$ des Hansen-Löslichkeits-Parameters von 11 bis 13 $\sqrt{MPa}$.

Als Lösungsmittel kommen grundsätzlich alle Lösungsmittel in Frage, die für auf Polystyrol basierende Polymere, Copolymere oder Blends geeignet sind. Beispiele hierfür sind in Saechtling, Kunststofftaschenbuch, 28. Ausgabe (2003), Seite 691 sowie DE 102 07 333 A1 und EP 739 930 A1 genannt, deren diesbezüglicher Inhalt Gegenstand der vorliegenden Anmeldung ist.

Vorzugsweise werden in dem erfindungsgemäßen Verfahren zur Lösung der Polymere Lösungsmittel ausgewählt aus der Gruppe bestehend aus Ketonen, Ether, Cycloalkanen, Estern, insbesondere Aceton, Methylethylketon, Tetrahydrofuran, Dialkylester von Dicarbonsäuren und Fettsäurealkylester, z.B. Fettsäuremethylester (FA-ME), eingesetzt.

Bei der Fällung in Schritt b) wird als Fällmittel vorzugsweise eine Verbindung ausgewählt aus der Gruppe bestehend aus Wasser, Alkoholen, insbesondere Methanol, Ethanol, Isopropanol, n-Propanol und Butanol, oder Gemischen hiervon eingesetzt.

Eine bevorzugte Variante des erfindungsgemäßen Verfahrens sieht vor, dass im Anschluss an Schritt a) die nicht löslichen Bestandteile der Verbundstoffe mechanisch abgetrennt werden. Als mechanische Abtrennungsmöglichkeiten sind hier insbesondere die Filtration oder Sedimentation zu nennen.

Vorzugsweise wird die Ausfällung der Polymere bei Temperaturen bis 170 °C, bevorzugt bei Temperaturen bis 100 °C und besonders bevorzugt im Temperaturbereich von Raumtemperatur (20 °C) bis 50 °C durchgeführt.

In einer bevorzugten Variante wird vor der Separation in Schritt c) das mindestens eine Fällungsprodukt getrocknet. Eine andere bevorzugte Variante sieht vor, dass die Trocknung des mindestens einen Fällungsprodukts erst nach der Separation in Schritt c) erfolgt.

Die erfindungsgemäße Trocknung des Fällungsproduktes in Schritt c) erfolgt bevorzugt mittels eines Rotationsverdampfers oder eines Taumeltrockners.

Die separierten Polymerphasen können ohne Aufheizen durch Lochmatrizen zu Strängen gepresst, dabei das restliche Lösemittel weiter getrocknet und dadurch granuliert werden. Durch das fehlende Aufheizen kann so gegenüber dem Stand der Technik eine Energieeinsparung und eine schonendere Behandlung des Materials erreicht werden. Ein weiterer Vorteil besteht darin, dass aufgrund der Trocknung die Polymere nicht mehr verkleben und so direkt granuliert werden können.

Die erzeugten Granulate sind ohne weitere Aufbereitung auf üblichen Maschinen verarbeitbar. Die erzeugten Partikel zeigen einwandfreies Einzugsverhalten.

Die in dem erfindungsgemäßen Verfahren recyclierbaren Polymere, die auf Polystyrol basieren, sind vorzugsweise ausgewählt aus der Gruppe bestehend aus Styrol-Butadien (SB), Styrol-Acrylnitril (SAN), Acrylnitril-Butadien-Styrol (ABS), Acrylester-Styrol-Acrylnitril (ASA), Polyphenylenoxid (PPO) und deren Blends, insbesondere ABS/PC, ABS/PA und PPO/PS.

Ebenso ist es möglich, dass die nach dem erfindungsgemäßen Verfahren aufbereiteten Kunststoffe weitere polymere Bestandteile enthalten. Bezüglich der weiteren polymeren Bestandteile sind alle aus dem Stand der Technik bekannten Polymere einsetzbar, wobei Polymere aus der Gruppe bestehend aus Polyolefinen, Polyamiden, Polyvinylchloriden, Polyurethanen, Polycarbonaten, Polyacrylaten, Polymethacrylaten, Polyesterharzen, Epoxidharzen, Polyoxyalkylenen, Polyalkylenterephthalaten und Polyvinylbutyral sowie deren Copolymeren und Blends bevorzugt sind.

Derartige weitere polymere Bestandteile können vorzugsweise in einem vorgelagerten Schritt mittels einer Dichtetrennung von den auf Polystyrol basierenden Polymeren abgetrennt werden. Dabei ist es auch möglich, in einer derartigen vorgelagerten Dichtetrennung weitere nicht-polymere Bestandteile des Kunststoffs abzutrennen.

In einer weiteren bevorzugten Variante ist vorgesehen, dass der aufzubereitende Kunststoff zusätzliche niedermolekulare Additive enthält. Als niedermolekulares Additiv ist dabei z.B. ein Flammschutzadditiv oder ein Weichmacher bevorzugt.

Als Flammschutzmittel sind hierbei insbesondere bromierte Flammschutzmittel, insbesondere ausgewählt aus der Gruppe bestehend aus polybromierten Diphenylethern, polybromierten Biphenylen, bis-[Dibromopropoxydibromphenyl]propan und bis-(Tribromphenoxy) ethan zu nennen.

Hinsichtlich der Weichmacher sind insbesondere Verbindungen ausgewählt aus der Gruppe bestehend aus Phthalsäureestern, Adipinsäureestern, aliphatischen $C_4$-$C_9$-Carbonsäuren und Polyalkylenglykolen bevorzugt.

Derartige niedermolekulare Additive verbleiben im Schritt b) in der Lösung und können so vorzugsweise von den ausgefällten Polymeren abgetrennt werden.

Verwendung findet das erfindungsgemäße Verfahren zum Recycling von Kunststoffen mit einem Anteil an Polystyrolen, dessen Copolymeren und/oder Blends. Hierzu zählen insbesondere Kunststoffe aus der Elektronikschrottverarbeitung und aus Shredder-Leichtfraktionen.

Anhand der nachfolgenden Figur und des Beispiels soll der erfindungsgemäße Gegenstand näher erläutert werden, ohne diesen auf die hier gezeigten Ausführungsformen beschränken zu wollen.

Die Figur zeigt ein Fourier-Transform-Infrarot-Spektrum von zwei getrennten Polymeren, wobei ein Spektrum hochschlagzähes Polystyrol (HIPS) und das andere Spektrum Acrylnitril-Butadien (ABS) betrifft.

**Beispiel 1**

Die Lösung des Kunststoffabfalls erfolgt in einem 10-L Rührreaktor. Dazu wird das zerkleinerte und windgesichtete Material einer E-Schrott-Shredderleichtfraktion in 30%igen Ansätzen mit der Formulierung CreaSolv-CT versetzt und bei Raumtemperatur gelöst.

Die Filtration der Lösung erfolgt über ein 2 mm und ein 400 μm Sieb. Ein Teil der Lösung wird über ein Gewebefilter mit der Maschenweite 20-β-Mesh (Dreiecke der Kantenlänge 60 μm) feinfiltriert.

Nach der Filtration liegen ca. 6,4 kg Material grobfiltriert und ca. 1,3 kg als feinfiltrierte Lösung vor. Die Polymertrennung wird in zwei unabhängigen Versuchen mit jeder Lösung einzeln durchgeführt:

Die grobfiltrierte Lösung wird in einem kleintechnischen 100 L-Rührkessel mit der Fällmittelformulierung CreaSolv-PS-F1.1 gefällt und das gefällte Produkt vom Überstand abgetrennt.

Ebenso wird die feinfiltrierte Lösung gefällt.

Die extrahierten Fällprodukte weisen einen Lösungsmittelanteil von ca. 60 % auf und werden zunächst am Rotationsverdampfer getrocknet.

Es entstehen zwei Polymergele mit verschiedenen Hafteigenschaften, die sich separieren.

Die getrennten Polymergele werden jeweils einzeln in einem Laborkneter (2,4-1 Nennvolumen) bei leichtem Vakuum (200 mbar) weitergetrocknet und dadurch die Restlösungsmittel abgezogen. Dabei zerfallen die Gele zu extrusionsfähigen Polymerpartikeln.

Im Zuge der Musterproduktion wurde ein Teil der grobfiltrierten Lösung zu einem gemischten Styrolcopolymer (Muster MISCHex) verarbeitet. Der andere Teil wurde im Zuge der Trocknung in zwei Fraktionen geteilt (Muster SCHWARZex und Muster GRAUex).

Die feinfiltrierte Lösung wurde gefällt, mit Phasenseparation getrocknet, die dabei entstehenden zwei Polymerphasen voneinander getrennt und zu den Mustern SCHWARZff und GRAUff verarbeitet.

Die Produkte SCHWARZ und GRAU wurden mittels FT-IR untersucht und mittels Datenbankabgleich als ABS (Muster SCHWARZ) und HIPS (Muster GRAU) charakterisiert (Figur).

Die durchgeführten IR-Untersuchungen belegen die hohe Trennleistung der Phasenseparation: Es finden sich keine Spuren des jeweils anderen Polymers in den getrennten Polymeren.

Als erste orientierende Untersuchung zur thermoplastischen Verarbeitung wurden MFI-Stränge erzeugt (220-240 °C, 10 kg), anhand derer die Elastizität und die Oberflächenbeschaffenheit der Produkte qualitativ geprüft wurde. Hierbei erweisen sich Produkte GRAUff und GRAUex als sehr elastisch, die Muster SCHWARZff, SCHWARZex und MISCHex verhalten sich ohne Extrusion vergleichsweise spröde.

Hinsichtlich der Oberflächenbeschaffenheit zeigen die feinfiltrierten Muster die besseren Ergebnisse.

**Patentansprüche**

1. Verfahren zum Recycling von Kunststoffen, die mindestens zwei auf Polystyrol basierende Polymere, Copolymere oder Blends hiervon enthalten, bei dem

   a) der Kunststoff mit mindestens einem Lösungsmittel für die Polymere, Copolymere oder Blends hiervon versetzt wird,
   b) der Lösung der Polymere, Copolymere oder Blends hiervon mindestens ein mit dem mindestens einen Lösungsmittel mischbares Fällmittel zur Ausfällung der mindestens zwei Polymere, Copolymere oder Blends hiervon in gelartiger Form zugesetzt wird, wobei das mindestens eine Fällmittel und/oder dessen Menge so gewählt wird, dass die Mischung von Lösungsmittel und Fällmittel einen Wert für die Wasserstoff-Bindungsstärke $\delta_H$ des Hansen-Löslichkeits-Parameters von 10 bis 15 $\sqrt{\text{MPa}}$ aufweist und
   c) mindestens zwei gelartige Fällungsprodukte gebildet werden, die sich voneinander aufgrund ihrer Adhäsionseigenschaften separieren lassen.

2. Verfahren nach Anspruch 1,
   **dadurch gekennzeichnet, dass** die Adhäsionskräfte die durch das Durchmischen zugeführte Dispersionsenergie überwiegt, so dass sich das mindestens eine gelartige Fällungsprodukt vollständig von den weiteren Bestandteilen des Kunststoffs entmischt.

3. Verfahren nach einem der vorhergehenden Ansprüche,
   **dadurch gekennzeichnet, dass** die Mischung von Lösungsmittel und Fällmittel einen Wert für die Wasserstoff-Bindungsstärke $\delta_H$ des Hansen-Löslichkeits-Parameters von 11 bis 13 $\sqrt{\text{MPa}}$ aufweist.

4. Verfahren nach einem der vorhergehenden Ansprüche,
   **dadurch gekennzeichnet, dass** das Lösungsmittel in a) ausgewählt ist aus der Gruppe bestehend aus Ketonen, Ether, Cycloalkanen, Estern, insbesondere Aceton, Methylethylketon, Tetrahydrofuran, Dialkylester von Dicarbonsäuren und Fettsäurealkylester.

5. Verfahren nach einem der vorhergehenden Ansprüche,
   **dadurch gekennzeichnet, dass** das Fällmittel in b) ausgewählt ist aus der Gruppe bestehend aus Wasser, Alkoholen, insbesondere Methanol, Ethanol, Isopropanol, n-Propanol und Butanol, oder Gemischen hiervon.

6. Verfahren nach einem der vorhergehenden Ansprüche,
   **dadurch gekennzeichnet, dass** nach Schritt a) die nichtlöslichen Bestandteile des Verbundstoffs mechanisch abgetrennt werden.

7. Verfahren nach dem vorhergehenden Anspruch,
   **dadurch gekennzeichnet, dass** die mechanische Abtrennung durch Filtration erfolgt.

8. Verfahren nach einem der vorhergehenden Ansprüche,
   **dadurch gekennzeichnet, dass** die Ausfällung bei Temperaturen bis 170°C erfolgt.

9. Verfahren nach dem vorhergehenden Anspruch,
   **dadurch gekennzeichnet, dass** die Ausfällung bei Temperaturen bis 100°C erfolgt.

10. Verfahren nach einem der vorhergehenden Ansprüche,
    **dadurch gekennzeichnet, dass** vor der Separation in Schritt c) das mindestens eine Fällungsprodukt getrocknet wird.

11. Verfahren nach einem der vorhergehenden Ansprüche,
    **dadurch gekennzeichnet, dass** nach der Separation in Schritt c) das mindestens eine Fällungsprodukt getrocknet wird.

12. Verfahren nach einem der beiden vorhergehenden Ansprüche,
    **dadurch gekennzeichnet, dass** die Trocknung mittels Rotationsverdampfung erfolgt.

13. Verfahren nach einem der vorhergehenden Ansprüche, **dadurch gekennzeichnet, dass** im Anschluss das mindestens eine separierte Polymergel durch Lochmatrizen zu Strängen gepresst werden.

14. Verfahren nach einem der vorhergehenden Ansprüche,
    **dadurch gekennzeichnet, dass** die Copolymere und Blends von Polystyrol ausgewählt sind aus der Gruppe bestehend aus Styrol-Butadien (SB), Styrol-Acrylnitril (SAN), Acrylnitril-Butadien-Styrol (ABS), Acrylester-Styrol-Acrylnitril (ASA) und deren Blends.

15. Verfahren nach einem der vorhergehenden Ansprüche,
**dadurch gekennzeichnet, dass** der Kunststoff weitere polymere Bestandteile enthält.

16. Verfahren nach dem vorhergehenden Anspruch, **dadurch gekennzeichnet, dass** die weiteren polymeren Bestandteile ausgewählt sind aus der Gruppe bestehend aus Polyolefinen, Polyamiden, Polyvinylchloriden, Polyurethanen, Polycarbonaten, Polyacrylaten, Polymethacrylaten, Polyesterharzen, Epoxydharzen, Polyoxyalkylenen, Polyalkylenterephthalaten und Polyvinylbutyral sowie deren Copolymeren und Blends.

17. Verfahren nach einem der beiden vorhergehenden Ansprüche, **dadurch gekennzeichnet, dass** die weiteren polymeren Bestandteile in einem vorgelagerten Schritt durch eine Dichtetrennung abgetrennt werden.

18. Verfahren nach dem vorhergehenden Anspruch, **dadurch gekennzeichnet, dass** in der Dichtetrennung weitere polymerfremde Bestandteile des Kunststoffs abgetrennt werden.

19. Verfahren nach einem der vorhergehenden Ansprüche, **dadurch gekennzeichnet, dass** der Kunststoff zusätzlich niedermolekulare Additive enthält.

20. Verfahren nach dem vorhergehenden Anspruch, **dadurch gekennzeichnet, dass** die niedermolekularen Additive Flammschutzadditive, Weichmacher und Stabilisatoren sind.

21. Verfahren nach dem vorhergehenden Anspruch, **dadurch gekennzeichnet, dass** die Flammschutzmittel bromierte Flammschutzmittel, insbesondere ausgewählt sind aus der Gruppe bestehend aus polybromierten Diphenylether, polybromierte Biphenyle, bis-[Dibromopropoxy-dibromphenyl]propan, Hexabromdecan und bis-(Tribromphenoxy)ethan.

22. Verfahren nach Anspruch 20, **dadurch gekennzeichnet, dass** die weichmacher ausgewählt sind aus der Gruppe.bestehend aus Phthalsäureestern, Adipinsäureestern, aliphatischen $C_4$-$C_8$-Carbonsäuren und Polyalkylenglykolen.

23. Verfahren nach einem der Ansprüche 19 bis 22, **dadurch gekennzeichnet, dass** die niedermolekularen Additive in Schritt b) in der Lösung verbleiben und so von den ausgefällten Polymeren abgetrennt werden.

24. Verwendung des Verfahrens nach einem der vorhergehenden Ansprüche zum Recycling von Kunststoffen mit einem Anteil an Polystyrol, dessen Copolymeren und/oder Blends.

25. Verwendung nach Anspruch 24 zum Recycling von Kunststoffen aus der Elektronikschrottverarbeitung und aus Shredder-Leichtfraktionen.

## Claims

1. Method for recycling plastic materials, which contain at least two polymers, copolymers or blends hereof based on polystyrene, in which

   a) the plastic material is mixed with at least one solvent for the polymers, copolymers or blends hereof,
   b) there is added to the solution of the polymers, copolymers or blends hereof at least one precipitating agent which is miscible with the at least one solvent in order to precipitate the at least two polymers, copolymers or blends hereof in gel-like form, the at least one precipitating agent and/or the quantity thereof being chosen such that the mixture of solvent and precipitating agent has a value for the hydrogen bond strength $\delta_H$ of the Hansen solubility parameter of 10 to 15 $\sqrt{MPa}$ and
   c) at least two gel-like precipitation products are formed, which can be separated from each other on the basis of their adhesion properties.

2. Method according to claim 1, **characterised in that** the adhesion forces outweigh the dispersion energy supplied by the thorough mixing, so that the at least one gel-like precipitation product is demixed completely from the further components of the plastic material.

3. Method according to one of the preceding claims, **characterised in that** the mixture of solvent and precipitating agent has a value for the hydrogen bond strength $\delta_H$ of the Hansen solubility parameter of 11 to 13 $\sqrt{MPa}$.

4. Method according to one of the preceding claims, **characterised in that** the solvent in a) is selected from the group comprising ketones, ether, cycloalkanes, esters, in particular acetone, methyl ethyl ketone, tetrahydrofuran, dialkylester of dicarboxylic acids and fatty acid alkylester.

5. Method according to one of the preceding claims, **characterised in that** the precipitating agent in b) is selected from the group comprising water, alcohols, in particular methanol, ethanol, isopropanol, n-propanol and butanol, or mixtures hereof.

6. Method according to one of the preceding claims,

**characterised in that**, after step a), the insoluble components of the composite material are separated mechanically.

7. Method according to the preceding claim, **characterised in that** the mechanical separation is effected by means of filtration.

8. Method according to one of the preceding claims, **characterised in that** the precipitation is effected at temperatures up to 170°C.

9. Method according to the preceding claim, **characterised in that** the precipitation is effected at temperatures up to 100°C.

10. Method according to one of the preceding claims, **characterised in that**, before the separation in step c), the at least one precipitation product is dried.

11. Method according to one of the preceding claims, **characterised in that**, after the separation in step c), the at least one precipitation product is dried.

12. Method according to one of the two preceding claims, **characterised in that** the drying is effected by means of rotary evaporation.

13. Method according to one of the preceding claims, **characterised in that** subsequently the at least one separated polymer gel is pressed through perforated matrices to form strands.

14. Method according to one of the preceding claims, **characterised in that** the copolymers and blends of polystyrene are selected from the group comprising styrene-butadiene (SB), styreneacrylonitrile (SAN), acrylonitrile-butadiene-styrene (ABS), acrylester-styrene-acrylonitrile (ASA) and blends thereof.

15. Method according to one of the preceding claims, **characterised in that** the plastic material contains further polymer components.

16. Method according to the preceding claim, **characterised in that** the further polymer components are selected from the group comprising polyolefins, polyamides, polyvinylchlorides, polyurethanes, polycarbonates, polyacrylates, polymethacrylates, polyester resins, epoxy resins, polyoxyalkylenes, polyalkyleneterephthalates and polyvinylbutryal and also copolymers and blends thereof.

17. Method according to one of the two preceding claims,

**characterised in that** the further polymer components are separated in a preceding step by a density separation.

18. Method according to the preceding claim, **characterised in that**, in the density separation, further components of the plastic material which are extraneous to the polymer are separated.

19. Method according to one of the preceding claims, **characterised in that** the plastic material contains in addition low-molecular additives.

20. Method according to the preceding claim, **characterised in that** the low-molecular additives are flameproofing additives, plasticisers and stabilisers.

21. Method according to the preceding claim, **characterised in that** the flameproofing agents are brominated flameproofing agents, in particular selected from the group comprising polybrominated diphenylether, polybrominated biphenyls, bis-[dibromopropoxy-dibromophenyl]propane, hexabromodecane and bis-(tribromophenoxy)ethane.

22. Method according to claim 20, **characterised in that** the plasticisers are selected from the group comprising phthalic acid esters, adipinic acid esters, aliphatic $C_4$-$C_8$ carboxylic acids and polyalkylene glycols.

23. Method according to one of the claims 19 to 22, **characterised in that** the low-molecular additives in step b) remain in the solution and thus are separated from the precipitated polymers.

24. Use of the method according to one of the preceding claims for recycling plastic materials with a proportion of polystyrene, copolymers thereof and/or blends.

25. Use according to claim 24 for recycling plastic materials from electronic scrap processing and from shredder light fractions.


**Revendications**

1. Procédé de recyclage de matières plastiques qui renferment au moins deux polymères à base de polystyrène ou des co-polymères ou des mélanges de tels polymères selon lequel :

   a) on mélange la matière plastique avec au moins un solvant des polymères, co-polymères ou mélanges de ceux-ci,
   b) on ajoute à la solution des polymères, co-polymères ou mélanges de ceux-ci au moins un agent de précipitation miscible avec le ou les solvant(s) pour faire précipiter les polymères, co-polymères ou mélanges de ceux-ci sous forme de gel, le ou les agent(s) de précipitation et/ou sa ou leur quantité étant choisi(s) de sorte que le mélange de solvant(s) et d'agent(s) de précipitation présente une valeur de la force de liaison hydrogène $\delta_H$ du paramètre de solubilité de Hansen de 10 à 15 √Mpa, et

c) on forme au moins deux produits de précipitation sous forme de gel pouvant être séparés à partir de leur propriété d'adhérence.

2. Procédé conforme à la revendication 1, **caractérisé en ce que** la force d'adhérence prédomine l'énergie de dispersion mise en oeuvre par le mélange de sorte qu'au moins un produit de précipitation sous forme de gel se sépare totalement, des autres constituants de la matière plastique.

3. Procédé conforme à l'une des revendications 1 et 2, **caractérisé en ce que** le mélange de solvants et d'agents de précipitation présente une valeur de la force de liaison hydrogène $\delta_H$ du paramètre de solubilité de Hansen de 11 à 13 √MPa.

4. Procédé conforme à l'une des revendications 1 à 3, **caractérisé en ce que** l'on choisit le solvant de l'étape a) dans le groupe formé par les cétones, les éthers, les cycloalcanes, les esters, en particulier l'acétone, la méthyléthylcétone, le tétrahydrofurane, les dialkylesters d'acides dicarboxyliques et les alkylesters d'alcools gras.

5. Procédé conforme à l'une des revendications 1 à 4, **caractérisé en ce que** l'on choisit l'agent de précipitation de l'étape b) dans le groupe formé par l'eau, les alcools, en particulier le méthanol, l'éthanol, l'isopropanol, le n-propanol et le butanol ou leurs mélanges.

6. Procédé conforme à l'une des revendications 1 à 5, **caractérisé en ce que** après l'étape a) on sépare mécaniquement les constituants non solubles du composé composite.

7. Procédé conforme à la revendication 6, **caractérisé en ce que** l'on effectue la séparation mécanique par filtration.

8. Procédé conforme à l'une des revendications 1 à 7, **caractérisé en ce que** l'on effectue la précipitation à des températures allant jusqu'à 170° C.

9. Procédé conforme à la revendication 8, **caractérisé en ce que** l'on effectue la précipitation à des températures allant jusqu'à 100° C.

10. Procédé conforme à l'une des revendications 1 à 9, **caractérisé en ce que** avant la séparation dans l'étape c) on sèche le ou les produit(s) de précipitation.

11. Procédé conforme à l'une des revendications 1 à 10, **caractérisé en ce que** après la séparation dans l'étape c) on sèche le ou les produit(s) de précipitation.

12. Procédé conforme à l'une des revendications 10 et 11, **caractérisé en ce que** l'on effectue le séchage par vaporisation par centrifugation.

13. Procédé conforme à l'une des revendications 1 à 12, **caractérisé en ce que** on comprime ensuite le ou les gel(s) polymère(s) séparé(s) au travers de matrices perforées pour obtenir des cordons.

14. Procédé conforme à l'une des revendications 1 à 13, **caractérisé en ce que** l'on choisit les co-polymères et mélanges de polystyrène dans le groupe formé par le styrène-butadiène (SB), le styrène-acrylonitrile (SAN), l'acrylonitrile-butadiène-styrène (ABS), l'acrylonitrite-styrène-acrylate (ASA) et leurs mélanges.

15. Procédé conforme à l'une des revendications 1 à 14, **caractérisé en ce que** la matière plastique renferme d'autres constituants polymères.

16. Procédé conforme à la revendications 15, **caractérisé en ce que** les autres constituants polymères sont choisi(s) dans le groupe formé par les polyoléfines, les polyamides, les polyvinyl-chlorures, les polyuréthanes, les polycarbonates , les polyacrylates, les polyméthacrylates, les résines polyester, les résines époxy, les polyoxyalkylenes, les polyalkylene-terephthalates et le polyvinyl-butyral, ainsi que leurs co-polymères et mélanges.

17. Procédé conforme à l'une des revendications 15 et 16, **caractérisé en ce que** l'on sépare les autres constituants polymères lors d'une étape antérieure par séparation par densité.

18. Procédé conforme à la revendication 17,

**caractérisé en ce que**
dans la séparation par densité on sépare d'autres composants exempts de polymère de la manière plastique.

19. Procédé conforme à l'une des revendications 1 à 18, **caractérisé en ce que**
la matière plastique renferme en outre des additifs de faible masse moléculaire.

20. Procédé conforme à la revendication 19, **caractérisé en ce que**
les additifs de faible masse moléculaire sont des additifs pare-flammes, des plastifiants et des agents de stabilisation.

21. Procédé conforme à la revendication 20, **caractérisé en ce que**
les pare-flammes sont des pare-flammes bromés en particulier choisis dans le groupe formé par les diphényléthers polybromés, le biphényle polybromés, le (bis-dibromopropoxy-dibromophényl) propane, l'héxabromodécane et le bis-(tribromophénoxy) éthane.

22. Procédé conforme à la revendication 20, **caractérisé en ce que**
les plastifiants sont choisis dans le groupe formé par les esters d'acide phtalique, les esters d'acide adipique, les acides carboxyliques aliphatiques en $C_4$-$C_8$ et les polyalkylène glycole.

23. Procédé conforme à l'une des revendications 19 à 22, **caractérisé en ce que**
les additifs de faible masse moléculaire restent en solution dans l'étape b) et sont ainsi séparés des polymères qui précipitent.

24. Utilisation du procédé conforme à l'une des revendications 1 à 23, pour le recyclage de matières plastiques renfermant une fraction de polystyrène, leurs co-polymères et/ou mélanges.

25. Utilisation conforme à la revendication 24, pour le recyclage de matières plastiques provenant de la transformation de déchets électroniques et de fractions légères de déchiqueteurs.

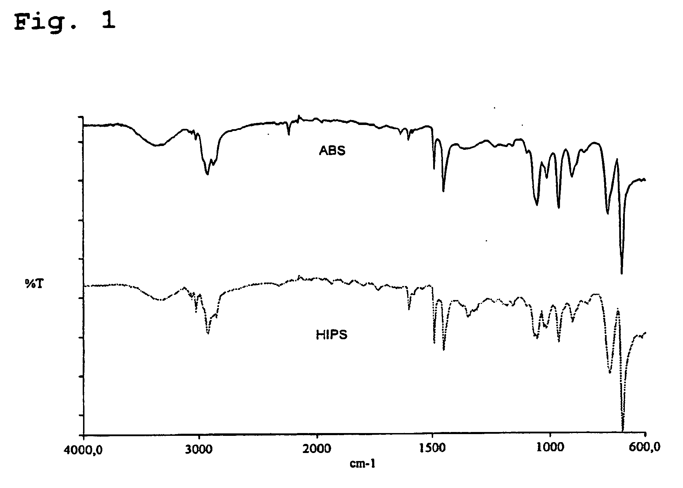

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 03035729 A2
- DE 10207336 A1
- WO 0238660 A1
- US 5994417 A
- DE 4435191 A1
- US 4164484 A
- DE 10207333 A1
- EP 739930 A1

### In der Beschreibung aufgeführte Nicht-Patentliteratur

- **Uddin, M.A. ; Bhaskar, T. ; Kaneko J. ; Muto, A. ; Sakata, Y. ; Matsui, T.** Dehydrohalogenatiopn during pyrolysis of brominate flame retardant containing high impact polystyrene (HIPS.Br) mixed with polyvinylchloride (PVC). *Fuel,* 2002, vol. 81, 1819-1825
- **Mäurer, A. ; Schlummer, M.** Good as new. Recycling plastics from WEEE and packaging waste. *Waste Management World,* Mai 2004, 33-43
- **Saechtling.** Kunststofftaschenbuch. 2003, 691